# EUROPEAN PATENT SPECIFICATION

(11) **EP 3 207 315 B1**
(45) Date of publication and mention of the grant of the patent: **18.03.2020**
(21) Application number: 15850416.7
(22) Date of filing: 15.10.2015
(51) Int. Cl.: F24F 12/00, F28F 27/02, F28D 21/00, F24F 11/30, F24F 110/40, F24F 11/81

(54) **ADAPTIVE DEFROSTING OF AN AIR TREATMENT SYSTEM**
ADAPTIVES ABTAUEN EINES LUFTBEHANDLUNGSSYSTEMS
DÉGIVRAGE ADAPTATIF D'UN SYSTÈME DE TRAITEMENT D'AIR

(30) Priority: 16.10.2014 SE 1430145
(43) Date of publication of application: 23.08.2017
(73) Proprietor: Swegon Operations AB, 535 23 Kvänum (SE)
(72) Inventor: LUNDIUS, Emilie, S-530 30 Tun (SE); WINDROTH, Dan, S-534 95 Vara (SE); OLTEGEN, Daniel, S-531 50 Lidköping (SE)
(74) Representative: Bergquist, Kjell Gunnar
(86) International application number: PCT/SE2015/051095
(87) International publication number: WO 2016/060609

(56) References cited:
- EP-A1- 2 546 581
- EP-A1- 2 546 581
- WO-A2-2009/091310
- DE-A1- 3 030 778
- US-A- 4 244 422
- US-A- 4 594 855
- US-A1- 2011 189 937
- US-A1- 2013 118 188
- US-A1- 2014 260 362

## Description

### TECHNICAL FIELD

The present invention relates to an air treatment system for providing fresh air to a building. The invention is in particular directed to the feature of defrosting, or deicing, a heat exchanger unit exchanging heat between the extract air flow and supply air flow in the air treatment system.

### BACKGROUND

In offices and other larger premises, there is often a need to be able to control the indoor climate separately in different parts of the premises or in individual rooms. An accurate local temperature and ventilation control is required to ensure a sufficient comfort level for the persons present in a building. Also heat generated by electric appliances and heat and exhaled air generated by persons inside the building have to be taken into account for the control. Together with the prevailing weather conditions, these factors have a large influence on the instantaneous demand for heating, cooling and ventilation capacity. Similar systems has lately been more commonly used also in smaller buildings, e.g. family houses, as there is a desire for better insulation and thus also a need for a forced change of air in these buildings. In order to improve the energy efficiency of buildings using air conditioning systems with controlled air intake/air outlet is there a desire to lower heat losses by exhausting warm air to the outside and reduce heat losses by heat exchanging exhaust air with fresh air.

Different systems for controlling the indoor climate in buildings are known previously. For instance, US2004/0148950 A1 discloses an air-conditioning system for a building that comprises a hot water circuit, a cold water circuit and several local air conditioning units. Each of the local air conditioning units comprises a fan for blowing air into a space in the building, a heating coil connected to the hot water circuit and/or a cooling coil connected to the cold water circuit. At least one temperature control system allows control of the heating power of the heating coils and the cooling power of the cooling coils. A calorific energy management system is provided with a heat pump for transferring calorific energy from the cold water system to the hot water system, from the cold water system to the outdoor air and from the outdoor air to the hot water system. The calorific energy management system is capable of managing the calorific energy transfers by means of a three level control system so as to optimize the energy consumption.

In systems for controlling the indoor climate in buildings, it is common that at least one heat exchanger is arranged in connection with the exhaust air duct. Such a heat exchanger can, for example, be a cross-flow or counter-flow heat exchanger (also called plate heat exchangers), and can be used for reducing the total energy consumption of the system by recovering a portion of the heat energy from the exhaust air before it is discharged. Thus, such a heat exchanger in connection with the exhaust air duct transfers heat energy from the exhaust air flowing out to the outdoor air flowing in. In certain conditions, frost or ice may form on the heat exchanger, which then has to go through a defrost cycle, during which the heat exchanger is heated to melt the ice. One way of performing defrosting (or deicing) of the exhaust air duct heat exchanger is to use the hot airflow leaving the building for heating and defrosting. In this case is the cold flow usually restricted or completely shut off in the part of the heat exchanger which shall be defrosted. Such systems are for example described in EP 2 546 581, US 2013/118 188 or WO 01/22021. However, there is always a loss in the energy efficiency during such a defrost cycle since the heat exchanger cannot be fully used for its normal purpose, that is to say heat recovery, which results in an undesirably high energy consumption.

There is therefore a desire for an improved control and device in order to provide a more efficient defrosting of a heat exchanger in the air treatment system in order to improve the overall energy efficiency of the system.

### DISCLOSURE OF THE INVENTION

The object of the present invention is to provide an improved system and method for control of the defrosting feature in an air treatment system.

The present invention thus relates to an air treatment system for providing air to a building or house. The air treatment system could be comprised of several units spaced apart from each other but the most common design today is to have a single unit which controls the flow of air to and from a building. Such a unit is commonly called an air handling unit and comprises flow controllers such as fans and dampers, heat exchangers, sensors and an Electronic Control Unit (ECU). The air handling unit is connected to an air channel system in order to exhaust air from and supply fresh air to different parts of the building via an air channel system. For large buildings, it may be desired to have more than one air handling unit to be able to supply the complete building but in these cases are the air handling units in general dedicated to different parts of the building and connected to different air channel systems and thus work as, and are controlled as, separate systems.

The air treatment system thus comprises an extract air channel for guiding air from the house or building to the outside, i.e. a channel for exhausting air from a building to the outside. The extract air channel have at least one extract air inlet and in the general case is there only one extract air inlet which in turn may be connected to a main channel which in turn may be connected to a multitude of channels for extracting air from different parts of a building. However, the air treatment system may have more than one extract air inlet if desired. The extract air channel further comprises at least one extract air outlet for exhausting the flow of extract air from a building to the outside. If desired, there could of course be further extract air outlets in the system, or connecting the extract air outlet to some kind of exhaust manifold. The air treatment system further comprises a supply air channel for guiding supply air, or fresh air, from outdoor into a building or structure. The supply air channel is provided with at least one supply air inlet for intake of fresh air and at least one supply air outlet for delivering fresh air into a house or building, usually via a supply air channel system for distribution of the air in the building.

The air treatment system is also provided with a heat exchange function such that the heat in the exhausted extract air may be regained before it is discharged from the building. Hence, the extract air channel and the supply air channel are designed to be in a heat exchanging relation to each other by the use of one or several heat exchangers such that there are at least a first heat exchanger portion and a second heat exchanger portion. By heat exchanger portion is meant either a part of a heat exchanger or it may also be a complete heat exchanger unit. The number of heat exchanger portions is generally from 2 to 4 even though there may be more. An essential feature of these heat exchanger portions is that they are provided with separate flow control means, e.g. dampers, such that the flow through the respective portions may be controlled independently. Hence, the first heat exchanger portion is associated with a first flow controlling means, e.g. a first damper, for control of the air flow in the supply air channel of the first heat exchanger portion and said second heat exchanger portion is associated with a second flow controlling means, e.g. a second damper, for control of the air flow in the supply air channel of the second heat exchanger portion and so on. The flow controllers has above only been exemplified by dampers but also other kind of valves may be used, i.e. what may be called passive flow controllers. It could also be possible to replace the damper or valve with active flow controllers, e.g. fans, such that the flow through the heat exchanger portions in the supply air channel is controlled by active elements inducing a flow there through. When using passive elements, some kind of flow inducing means (fan) must be incorporated in the system at some other location in order to be able to provide a flow in the supply air channel. However, in this case, it may be sufficient with a single fan for providing a flow in all, or at least more than one, heat exchanger portions in the supply air channel.

In the system described above, it is only specifically mentioned two heat exchanger portions. However, there may also be a third portion and fourth portion or even further portions which may be provided with flow controlling means for individually controlling the air flow in the supply air channel of the heat exchanger portions. The heat exchanger portions may be of the same size or of different sizes, in many air handling systems are the heat exchanger portions designed to be of the same size. The air treatment system must comprise at least one fan in order to induce a flow of air in the extract air channel and the supply air channel of the air treatment system. In general, there is a fan in the supply air channel and another fan in the extract air channel in close vicinity to a heat exchanger divided into several heat exchanger portions with separately controllable dampers. However, the fans in the vicinity of the heat exchanger could be replaced for, or accompanied with, one or several fans at more remote locations, e.g. a large fan in a main supply air/extract air channel or several fans in a supply air/extract air duct system. In the case of using fans located in the vicinity of the heat exchanger is the system usually designed such that the desired air flow in the extract air channel respectively supply air channel is provided for by a single fan in each channel and the flow through the different heat exchanger portions may be controlled by dampers or other passive flow regulators. However, if the single fan for the extract air channel and/or the single fan for the supply air channel is replaced by individual fans for each heat exchanger portion, and each heat exchanger portion may have its individual extract air channel and/or supply air channel, it may not be necessary to include dampers or other passive flow controllers to control the flow in the respective heat exchanger portions.

The kind of system described above is in particular useful in cold climates where a lot of heat may be regained by heat exchanging warm extract air from inside the building with cold supply air from the outside. In order to be able to recover as much heat as possible, it is desired to cool down the extract air exhausted as much as possible. There may thus be a risk for ice growth on the heat exchanger as a result of the cooling down of the extract air, which often is rather humid, in the heat exchanger when the temperature is below zero degrees Celsius. Ice on the heat exchanger will decrease the heat exchange efficiency in the heat exchanger, thus reducing the heat recovery, and also increase the pressure drop over the heat exchanger such that there is needed an increased force, and thus increased energy consumption, in order to provide a desired air flow through the heat exchanger. Since the pressure drop over the heat exchanger increases with ice growth is it possible to detect an icing condition in the heat exchanger by measuring the pressure drop over the heat exchanger. Hence, the extract air channel is provided with pressure indicating means or pressure sensors for estimating or measuring a pressure drop over the heat exchanger portions in the extract air channel. The measurements may be made by measuring the absolute pressure in the extract air channel upstream respectively downstream of the heat exchanger portions in order to calculate a pressure drop over the heat exchanger portions. Alternatively, the pressure drop may be measured directly by using a differential pressure sensor connected to a space in the extract air channel upstream the heat exchanger via a first pressure communicating conduit and connected to a space in the extract air channel downstream the heat exchanger via a second pressure communicating conduit such that a differential pressure over the heat exchanger is measured by the differential pressure sensor.

The air treatment system is further provided with an Electronic Control Unit (ECU) in order to control the system. The ECU is connected to various sensors and control devices and programmed to control the air treatment system in dependence of input from various sensors by providing output control signals to various control devices. The ECU may be a single entity or may comprise several entities so as to form an ECU, e.g. may sensor signals be processed by some kind of processor comprised in the sensor which thus forms part of the ECU.

The ECU is connected to the pressure indicating means or pressure sensors in order to receive input signals from these sensors. The ECU is also connected to the first and second flow controllers, i.e. the flow controllers (e.g. dampers) for the air flow in the first and second heat exchanger portions in the supply air channel, in order to send control signals to these flow controllers. Are there further heat exchanger portions present, with associated flow controllers, may also these be connected to the ECU. The ECU is programmed to output a defrost cycle initiation signal when there is an indication of an undesired high level of ice in at least one heat exchanger portion, e.g. from sensing an increased pressure drop being above a defined limit, over one or several heat exchanger portions. In case different heat exchanger portions are connected to the same extract air channel, upstream and/or downstream of the heat exchanger, the sensed pressure drop will thus indicate the overall pressure drop over several heat exchanger portions. In case there are separate extract air channels, provided with separate pressure sensors, will there thus be different measured values for the different heat exchanger portions. Alternatively, in the case of separate channels, could the pressure drop be measured only for one heat exchanger portion to be used as indication for when a defrost initiation signal should be output from the ECU.

There may also be other indications of an undesired high level of ice in the heat exchanger or heat exchanger portions, e.g. could the ice buildup in the heat exchanger be estimated from temperature measurements and/or humidity levels in the air. In addition, the level of ice buildup when it is desired to initiate a defrost operation may vary from case to case. Hence, the method may work for different ways of deciding when there is an undesired high level of ice buildup in the heat exchanger and for setting different levels of ice buildup as acceptable limits before a signal is sent for initiating a defrost operation. However, since there are pressure sensors or means for estimating the pressure drop over the heat exchanger is it in general suitable to use a limit of the measured or estimated pressure drop over the heat exchanger for triggering a defrost initiation signal.

The defrost cycle initiation signal comprises at least a control signal to a selected flow controller, i.e. one of the flow controllers (e.g. dampers) in the supply air channel which control the air flow in an associated the heat exchanger portion, in order to reduce or restrict the flow in the supply air channel through the heat exchanger portion associated with the selected flow controller. By restricting the flow of supply air by the selected flow controller will cooling effect of the associated heat exchanger portion be reduced and accumulated ice start to defrost by the warm flow of exhaust air from the building in the extract air channel. Hence, the flow has been controlled in order to defrost the heat exchanger portion without the need for specific heating arrangement even though it may be possible to incorporate additional heating devices.

Even though the above described arrangement provides an efficient defrosting or deicing of the heat exchanger is there always a loss in the heat recovery efficiency during a defrosting cycle since the heat comprised in the exhaust air passing through the selected heat exchanger portion of the extract air channel not is used at all, or to a less extent, for heating the supply air. However, as long as a great deal of the heat in the exhaust air is used for deicing of the selected heat exchanger is the heat used for a good purpose. When the heat exchanger portion is defrosted is it essentially a total waste of heat to continue with the defrosting operation which should be terminated as soon as possible. However, it is also desired to assure that the selected heat exchanger portion will be completely defrosted in order to avoid frequent repetitions of defrosting cycles, which also influence the overall heat recovery efficiency in a negative way. Hence, there is a desire to control the defrosting operation such that it terminates as soon as the heat exchanger portion is defrosted but not any longer.

In order to provide an efficient air treatment system which manages the defrosting operation in an efficient way is the ECU programmed to control the air flow in the supply air channel through the selected heat exchanger portion to be reduced or restricted while the pressure drop over the selected heat exchanger portion is decreasing. A decreasing pressure drop is an indication of melting of ice and thus that there is an ongoing defrosting operation. The reduced or restricted flow is controlled by the ECU to continue until there is an indication that the pressure drop over the selected heat exchanger portion is essentially constant. To be noted, by a continued reduced or restricted flow is meant that the flow as a mean time value is reduced during the defrosting operation and need not to be restricted or reduced at every instant of the defrosting operation even though it may be preferred to have a reduced flow during the whole defrosting operation of the selected heat exchanger portion. In order to provide a quick defrosting operation the flow of supply air in the selected heat exchanger portion could be completely cut off. An essentially constant pressure drop over the selected heat exchanger portion is thus an indication of that there is no longer any solid matter (ice) vanishing from the surface of the heat exchanger such that the pressure drop will decrease anymore and the defrosting operation of the selected heat exchanger portion should be ended. The indication that the pressure drop is essentially constant over time over the selected portion may for example be deduced by measuring that the pressure drop over several heat exchanger portions is essentially constant, is increasing or estimated to soon be increasing. The reason why the pressure drop, measured over several heat exchanger portions, is increasing at the end of a defrosting operation is that while the selected heat exchanger portion is defrosted will there be a continuous, slow increase of the pressure drop over the other heat exchanger portion (or portions) due to a continued ice growth. The ice growth rate may even be increased during the defrosting of the selected heat exchanger portion due to an increased flow of cold supply air through the other heat exchanger portion (or portions) to compensate for a reduced flow of fresh air in the defrosting heat exchanger portion. This way of deciding when to end a defrosting operation of a selected heat exchanger portion is in particular useful when there are at least two heat exchanger portions sharing a common chamber or channel for their extract air inlets and/or outlets. In this case are thus the at least two heat exchanger portions subjected to the same pressure upstream and downstream of the heat exchanger portions. In this case is it thus not possible to distinguish the pressure drop over one of the heat exchanger portions in an easy way. Hence, in case the defrosting operation of the selected heat exchanger portion is ended as soon as the pressure drop is constant is the defrost operation most probably not complete since there is a slight increase in the pressure drop over the other heat exchanger portion(s) and thus also still a slight decrease in the pressure drop over the selected heat exchanger portion indicating there still is some ice left on the selected heat exchanger portion. Hence, it is desired to continue with the defrosting operation of the selected heat exchanger portion until it is detected a slight increase in the pressure drop over the heat exchanger portions. Depending on the specific design of the air treatment system, the working conditions of the system during the defrosting cycle (air flow, temperatures, etc.), the programming of the ECU including its control signals and empirical data may the specific control algorithm for when to end the defrosting operation of the selected heat exchanger portion be refined, e.g. setting a specific pressure increase rate, a certain time interval after an increase of the pressure drop over the heat exchanger portions is detected or using a drastic change of the rate of reduction of the pressure drop over the heat exchanger for estimating when there will be an increased pressure drop over the heat exchanger portions. It may be advantageous to have the same setting for the flow controller in the selected heat exchanger portion, and also use the same settings for other parts of the system such as fans, valves and dampers, during the defrosting operation in order to perform relevant measurements of the pressure drop.

Hence, the ECU may be programmed such that the defrosting operation, having a reduced or restricted flow of supply air through the selected heat exchanger portion, will continue as long as a measured (or estimated) pressure drop over the heat exchanger portions is decreasing (for corresponding working conditions). When the pressure drop over said heat exchanger portions increases, which may be detected by measuring the pressure difference over the entire heat exchanger, is the ECU programmed to send a defrosting operation stop signal of the selected heat exchanger portion. Hence, the defrost operation of a specific heat exchanger portion may not be complete until there is an increase of the pressure drop when measured over the complete heat exchanger. It may thus in these cases be necessary to detect an increment of the pressure drop measured over the complete heat exchanger to be used to indicate that the pressure drop over the defrosted heat exchanger portion is essentially constant and completely defrosted. This feature is in particular useful when several heat exchanger portions are designed such that they are connected to the same extract air inlet and outlet and it is difficult, or impossible, to separate the pressure drop for the different heat exchanger portions. This is for example a usual design when the air treatment system is designed such that the first heat exchanger portion and the second heat exchanger portion are comprised in the same air handling unit. There may of course be further heat exchanger portions connected to the same extract air inlet and outlet and comprised in the same air handling unit. The ECU is in general programmed to perform defrost operations of all heat exchanger portions in the air treatment system before the defrost cycle is ended. However, the method will also function if only one or some of the heat exchanger portions are defrosted during a defrost cycle and the system is set to normal mode before defrosting all heat exchanger portions.

The air treatment system may be designed to include a bypass channel in the supply air channel for bypassing the heat exchanger portion(s). The bypass channel should comprise a flow controller, e.g. a damper, in order to control the flow through the bypass channel. The bypass channel may be useful for example during a defrosting operation in order to allow a through-flow to not overload the heat exchanger portions which not are subjected to a defrosting operation. The bypass channel may also be useful when there not is a desire to heat exchange the supply air with extract air, e.g. during warm periods when heat may have been accumulated in a building and there is a desire to exhaust hot air through the extract channel and introduce cooler outdoor air through the supply air channel without warming up the fresh air. However, the ECU may be programmed to output control signals during defrost operation to set the bypass flow controller to allow a flow through the bypass channel which is less than the normal flow through the heat exchanger portion which shall be subjected to a defrost operation, i.e. the bypass flow controller should be controlled by the ECU to be set to allow a through flow between 0 and 100 percent of the normal flow through a heat exchanger portion. In general the flow controller is set to provide a flow of least 50 % and is preferably set in a range of 75 to 100 percent of the normal flow. In general, the flow through the section to be defrosted is completely closed.

In order to calibrate the flow controller for the bypass channel the ECU may be programmed to set the system in specific configurations and compare the pressure drop over the heat exchanger portions for different configurations and settings. The flow through the bypass channel is calibrated relative the flow through a heat exchanger portion by adjusting the bypass flow controller to be set to an equivalence value. This could for example be a certain opening degree (position) of a damper if a damper is used as a bypass flow controller. The ECU may first record a pressure drop reference value when the air treatment system is controlled to have an unrestricted flow through all heat exchanger portions while the bypass channel closed. Thereafter, one flow controller associated with a heat exchanger portion is restricted, preferably to cut off the flow through the heat exchanger portion, and the flow through the other heat exchanger portions is unrestricted. The bypass flow controller is controlled by the ECU to be set to a value whereby the pressure drop over the heat exchanger portions, under the same working condition in the supply air channel, is at the same level as when all heat exchanger portions are open. Hence, it may be deduced an equivalence setting, or in the case of a bypass valve or bypass damper, an equivalence position of the bypass valve. The equivalence setting, or equivalence position, may thus be used for setting the through flow in the bypass channel to a desired level when one heat exchanger portion is cut off and the others are open.

In order to decide when to perform a defrost cycle may the pressure drop over the heat exchanger be used. In addition, in order to improve the accuracy of the control of the system, further parameters such as humidity and temperature may be used. The system may thus be provided with means for estimating or measuring these parameters. It may be possible to only use other parameters than pressure drop for deciding when to start a defrost operation. However, since there are pressure sensors or pressure indicating means present in the air treatment system, in order to measure or estimate the pressure drop over the heat exchanger, is the pressure drop usually used to decide when to initiate a defrost operation.

Concerning the problem related to frosting or ice buildup in the heat exchanger is this problem originating from the hot indoor air being cooled down to temperatures below zero and the condensing and freezing of moist in the air. Hence, if the system comprises means for estimating the humidity in the extract air it may be calculated at what temperature the humidity in the air will condense. The absolute humidity in the extract air may for example be calculated from measuring the relative humidity and temperature of the extract air, e.g. in the extract air inlet, or by measuring the absolute humidity directly by any known means. When the absolute humidity is known, it may easily be derived at what temperature the moisture in the air will condense and there is a risk for ice formation in the heat exchanger. As is obvious, the temperature must be below zero degrees Celsius in order to have ice formation. Hence, the air treatment system may be provided with means for estimating the temperature in the heat exchanger portions. There are several relevant places where a thermometer may be located, e.g. outdoor, in the supply air inlet or in the extract air outlet downstream the heat exchanger portions. The specific temperature measured which shall correspond to a risk for frosting of the heat exchanger may thus be dependent on where the temperature is measured. To have some security margin a measured outdoor temperature of zero degrees Celsius may be used since there is absolutely no chance that there will be any ice if the outdoor temperature is above zero degrees Celsius. A more specific measurement may for example be to measure the temperature by placing a thermometer in the coldest part of the heat exchanger and use the measurements therefrom as a more correct way for indicating frost risks. The humidity sensing means and temperature sensing means are connected to the ECU and adapted to send input signals to the ECU. The ECU is programmed to use the input signals from temperature and humidity sensors in addition to the pressure sensors to compute when a defrost cycle initiation signal should be output.

Hence, in order to execute a defrost cycle initiation signal should the pressure drop over one or several heat exchanger portions in the extract air channel be above a first limit for a present air flow in the extract air channel. The pressure drop may be compared with a pressure drop versus air flow velocity curve indicating threshold values or compared with a threshold value calculated by an algorithm. In addition, the dew point for the extract air should be above the estimated temperature in the heat exchanger provided the estimated temperature is below zero.

To use temperature and humidity measurements in addition to the pressure drop curve improves the accuracy of the system. However, it may be desired to provide the defrost cycle control system with a redundancy system and a defrost cycle initiation signal could be output from the ECU when it is indicated that the pressure drop over the heat exchanger portions in the extract air channel is above a second limit for a present air flow in the extract air channel. The second pressure drop limit is larger than the first pressure drop limit, i.e. the pressure drop threshold value which is dependent on the exhaust air humidity and a temperature indicative of the exhaust air temperature.

The pressure drop threshold limits for when the ECU should output a defrost cycle initiation signal could be based on one or several pressure drop measurement over the heat exchanger portions in the extract air channel in a defrosted condition, e.g. performed indoor or when the temperature is well above zero. The measurements should be made under well-known operating conditions, e.g. made for a certain air flow or for a known configuration of fan velocities and valve positions. The one or several measurements of the pressure drop may be used for setting limits for the defrost cycle initiation signal for other flow velocities and/or system configurations, e.g. by creating a pressure drop versus air flow velocity defrost cycle initiation limit curve by extrapolation of the measured values.

In order to provide threshold values of the pressure drop adapted individually for different air handling systems could the ECU be adapted to be reprogrammed in situ, i.e. the threshold limits for the defrost cycle initiation signal could be reset in the ECU. The ECU may thus be preprogrammed in order to recalculate limits for a defrost cycle initiation signal based on at least one pressure drop measurement over the heat exchanger in the extract air channel and provide pressure drop limit thresholds by an algorithm or a pressure drop versus air flow velocity defrost cycle initiation threshold limit curve.

The invention also comprises a method for controlling the defrosting of a heat exchanger in an air treatment system. The air treatment system has an extract air channel for guiding exhaust air from a building to the outside and a supply air channel for guiding fresh air from the outdoor into a building. The extract air channel and said supply air channel are in a heat exchanging relation to each other via at least two heat exchanger portions for exchanging heat between the extract air and the supply air. The air treatment system also comprises air flow regulators, e.g. dampers and fans, connected to an Electronic Control Unit (ECU) in order to control the flow of air in the extract air channel and the supply air channel in the heat exchanger. The extract air channel is further provided with pressure indicating means or pressure sensors in order to calculate a pressure drop over the heat exchanger portions in the extract air channel which provide the (ECU) with control input signals. The method comprises the steps of:
- Measuring or estimating the pressure drop over the heat exchanger portions in the extract air duct and use this information in the ECU for deciding if there should be a defrost cycle performed. If desired, further input may be used such as extract air humidity and temperature, measured or estimated, in the extract air channel in the heat exchanger
- Sending a defrost cycle initiation signal as output from the ECU in order to defrost said heat exchanger portion if it is decided by the ECU by the use of the pressure drop estimation that a defrost cycle should be performed
- controlling the flow in the supply air channel through at least one heat exchanger portion to be reduced or restricted by a valve or damper as a response to the defrost cycle initiation signal. In case there is a bypass channel present in the heat exchanger, a bypass damper is usually controlled to open.
- measuring or estimating the pressure drop over the heat exchanger portion during the defrost cycle while said reduced or restricted flow continues
- Continue with the defrost cycle, and defrosting the selected heat exchanger portion, as the pressure drop over the heat exchanger portion is decreasing until there is an indication that the pressure drop measured or estimated over said one heat exchanger portion is essentially constant or the pressure drop over several heat exchanger portions is essentially constant, is increasing or estimated to soon be increasing. Alternatively, this feature is however not part of the claimed method, the defrosting operation of the selected heat exchanger portion will continue until there is a drastic change of the rate of reduction of the pressure drop over the heat exchanger indicating there is or will be an increased or constant pressure drop over said heat exchanger portions or said at least one heat exchanger portion.

After the defrost operation for one heat exchanger portion is ended continues the defrost cycle preferably with the other heat exchanger portions until all heat exchanger portions has been defrosted.

The method may include further features as has been described for the system earlier, e.g. having a first and second defrost cycle initiation threshold limits, adaptive and reprogrammable threshold limits for the defrost cycle initiation and calibration of the bypass valve as disclosed above. Hence, the method is generally intended to work for all embodiments of the air treatment system as described herein.

### BRIEF DESCRIPTION OF THE DRAWINGS

The present invention will now be described more in detail with reference to the appended drawings, where:
- Figure 1: discloses an air treatment system comprising an air handling unit
- Figure 2: discloses a front view of a heat exchanger comprising two heat exchanger portions and a bypass channel
- Figure 3: discloses different embodiments of the air treatment system comprising different number of heat exchanger portions
- Figure 4: discloses a pressure drop curve versus time for the heat exchanger of an air treatment system when being used in an environment causing ice buildup on the heat exchanger

### DETAILED DESCRIPTION

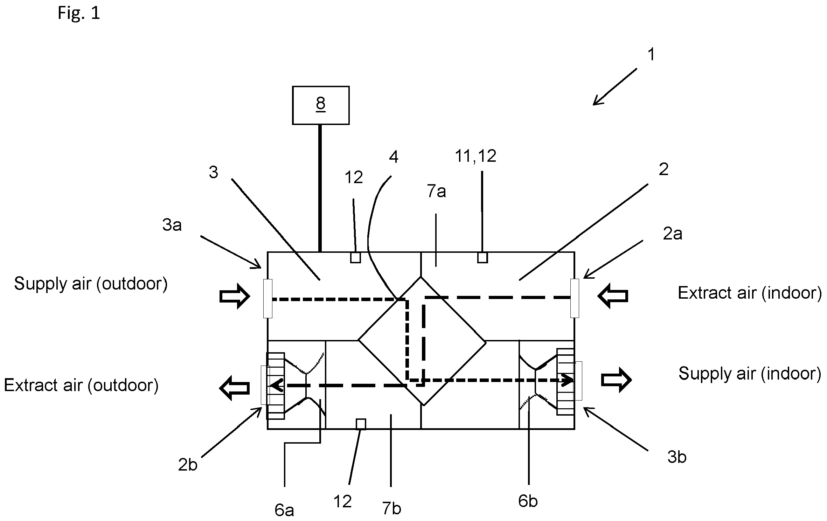

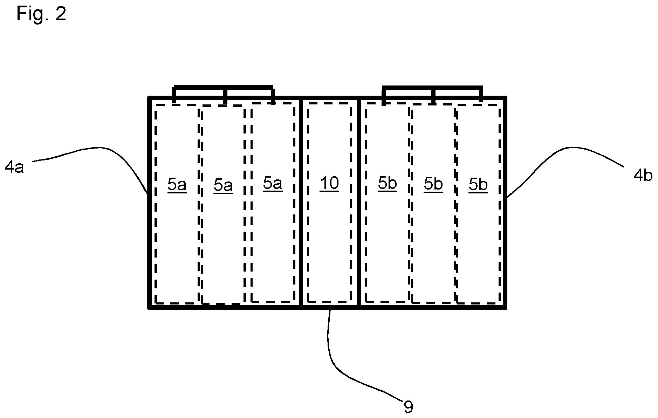

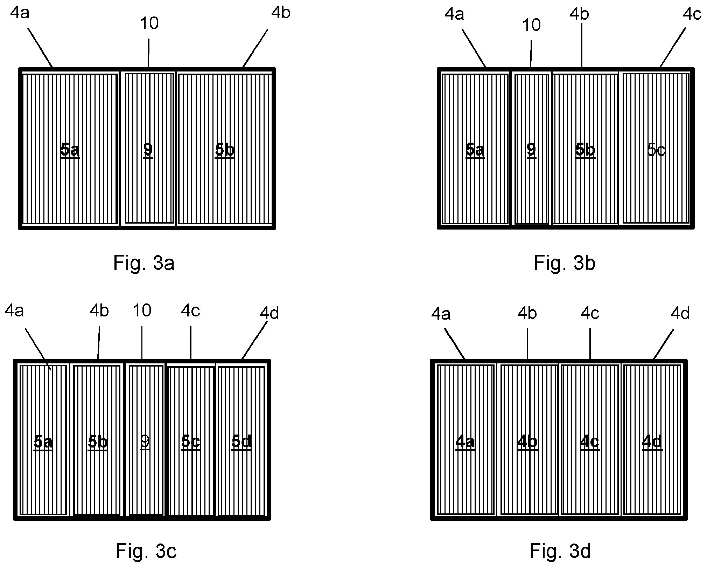

In figure 1 is disclosed an air treatment system 1 having its main components comprised in a compact air handling unit. However, it is obvious for the skilled person in the art that the air treatment system not need to comprise all these parts in a single unit but certain detail may be comprised at other locations in separate units, e.g. may the fans be located at other locations. The air treatment system 1 comprises an extract air channel 2 having an extract air inlet 2a receiving extract air, also commonly called exhaust air or indoor air, and guiding the extract air to the outside through an extract air outlet 2b via a heat exchanger 4 The heat exchanger 4 is explained more in detail in figures 2 and 3. The heat exchanger 4 is arranged to heat exchange the extract air in the extract air channel 2 with supply air, also commonly called fresh air or outdoor air, in a supply air channel 3. The supply air channel 3 have a supply air inlet 3a, for intake of supply air, and transfers the supply air further on via the heat exchanger 4a to a supply air outlet 3b for providing supply air to a building or house. The heat exchanger 4 is used for being able to regain some of the heat from the building by cooling down the extract air while heating the supply air in order to reduce the heat demand for the building or house in which the air treatment unit 1 is used. In this case is the heat exchanger exemplified as a cross flow air-to-air heat exchanger but other types of heat exchanger could be used, e.g. counter flow heat exchangers. The system further comprises an exhaust air fan 6a located between the heat exchanger 4 and the extract air outlet 2b in the exhaust air channel 2 and a supply air fan 6b located between the heat exchanger 4 and the supply air outlet 3b. However, the fans may be located at the respective inlets also if desired or at some other remote location. In general, there is a fan for creating an airflow in both the extract air channel 2 and the supply air channel 3 even though it may be sufficient with only one fan for either channel thus inducing a flow through the other channel by creating an overpressure or underpressure in the confined space to be ventilated.

The air treatment system is further provided with a first pressure sensor 7a on the inlet side of the extract air channel 2 and a second pressure sensor 7b on the outlet side of the extract air channel 2 such that a pressure difference, or pressure drop, over the heat exchanger may be measured. Alternatively, the pressure sensors 7a, 7b may be replaced for openings for pressure communicating conduits and the differential pressure over the heat exchanger may be measured directly by a sensor connected to both conduits and thus measuring the pressure difference. The air treatment system is further connected to an ECU for receiving control inputs from various sensors, e.g. the already mentioned pressure sensors 7a, b. The ECU is further connected to various flow controllers, e.g. the already mentioned fans 6a, 6b and/or passive elements such as dampers 5a-d, 10 (see figure 2 and 3).

The air treatment system may further comprise one or several humidity sensors 11 and temperature sensors 12 connected to the ECU 8 to be used as control inputs in order to improve the control of the system. For the purpose of controlling the ice buildup on, and defrosting of, the heat exchanger 4 may it be desired to know the humidity of the extract air entering the heat exchanger, i.e. if there is a risk for condensing when cooling down the air, and measuring a temperature which may be correlated to the risk of having a temperature below zero in at least some part of the heat exchanger. However, even though the controllability concerning defrosting operation may be improved by the use of humidity and temperature values may the system be controlled to perform automatic defrosting operation without these values and controlled only on basis of a pressure drop measurement over the heat exchanger 4.

In figure 2 is a front view of a side of the heat exchanger 4 facing the supply air channel 3. The heat exchanger 4 is divided into a first heat exchanger portion 4a and second heat exchanger portion 4b having a bypass channel 9 in between. The first heat exchanger portion 4a is provided with a first heat exchanger damper 5a and the second heat exchanger portion 4b is provided with a second heat exchanger portion 5b. The bypass channel 9 is provided with bypass dampers 10. The dampers 5a, 5b, 10 are arranged such that they may close the respective channels completely, allow a variable flow through or be completely open. However, it may also be possible to use other kind of flow restrictors which essentially switch between fully open or closed.

In figure 3 is disclosed a variety of different arrangements of the heat exchanger concerning the flow in the extract air channel 2. In the figures 3a - 3d, each heat exchanger portion 4a - 4d is provided with an associated damper 5a - 5d such that the flow through each of the heat exchanger portions 4a - 4d may be individually controlled. In figure 3a is disclosed the same set up as described in figure 1 and 2, i.e. a first and second heat exchanger portion 4a, 4b and a bypass channel 9 in the middle. The bypass channel 9 could also be located at either side. In figure 3b is disclosed another arrangement having added a third heat exchanger portion 4c compared to the heat exchanger in figure 3a and in figure 3c is a fourth heat exchanger portion 3d added. The heat exchanger described in figure 3d differs from the three earlier described heat exchangers in that no bypass channel is present. With an increasing number of heat exchanger portions is the need for a bypass conduit reduced, at least in the aspect of defrosting. In case there are four heat exchanger portions, of equal size, it may be possible to defrost one portion while still having 75 % of the complete heat exchanger capacity available. By a slight increase in the other portions, and possibly a somewhat lower overall capacity during the defrosting operation, will it be possible to defrost the heat exchanger without any need to loose and major overall efficiency in the heat exchanger and still provide a decent through flow in the heat exchanger. In these figures, the number of heat exchanger portions has only been exemplified to be from 2 to 4 but there may be further heat exchanger portions added also if desired.

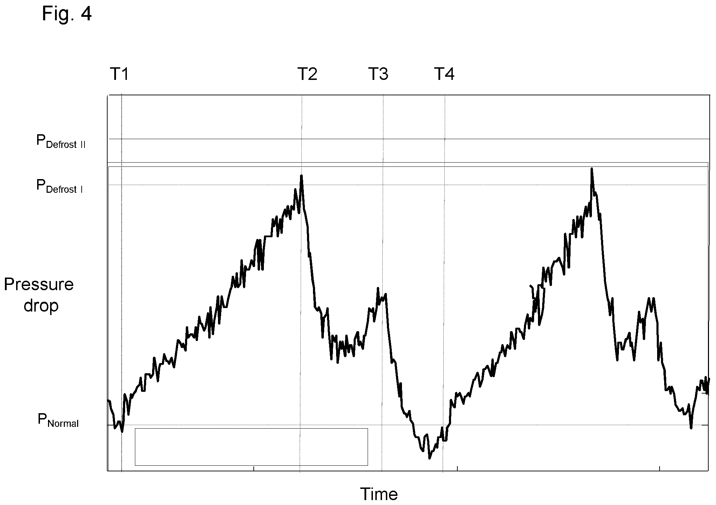

In figure 4 is disclosed a pressure drop curve versus time for such a heat exchanger as exemplified in figures 1 and 2, i.e. a heat exchanger provided with 2 heat exchanger portions 4a, 4b, when being used in an environment causing ice buildup on the heat exchanger. The air treatment system may thus be controlled as follows with reference to figure 4:
At a starting point, T1, is the heat exchanger essentially defrosted and has a rather low initial pressure drop P_{Normal}. When being used for heat exchange is there a slow increase of the pressure drop over both the heat exchanger portions 4a, 4b. The pressure drop will increase until the limit P_{Defrost I} is reached and the ECU 8 will output a defrost cycle initiation signal at T2. The defrost initiation signal will comprise a control signal to the heat exchanger to cut off, or at least significantly restricting, the flow by the dampers through either of the heat exchanger portions, e.g. setting the first damper 5a to restrict the flow through the first heat exchanger portion 4a in the extract air channel 2, while the other heat exchanger portion 4b has its associated damper 5b set to allow a flow through. At the same time is the bypass damper 10, which usually is closed when the air treatment system is run in a heat exchange mode to recover heat from the extract air, opened to not overload the second heat exchanger portion. This setting will usually remain the same until there is an indication that the defrosting operation is completed for the first heat exchanger portion 4a which occurs at T3. At T3 has there been an increase in the pressure drop over the heat exchanger. This is the result of the complete defrosting operation of the first heat exchanger portion 4a, which thus not provides any further reduction of the pressure drop, and the continuous, slow pressure drop increase over the second heat exchanger portion 4b which thus sums up in an overall pressure drop increase. Hence, at T3 is sent a new control signal to open the first damper 5a and start to use the first heat exchanger portion 4a for heat exchange operation while the second heat exchanger damper 5b is switched to a closed (or significantly restricted) position for decreasing or stopping the air flow through the second heat exchanger portion 4b. This setting may thus continue until T4 when there once more is a slight increase in the overall pressure drop over the heat exchanger 4 and it is decided that both heat exchanger portions are defrosted. The air treatment system 1 may thus return to operate in its normal mode with full heat recovery having both the heat exchanger portion dampers 5a, 5b open and the bypass damper 10 closed to increase heat recovery. At T4, the pressure drop over the heat exchanger is thus once again in the vicinity Of P_{Normal}.

The above described control method is only an example for how the pressure drop increase may be used for controlling a heat exchanger system with two heat exchanger portions. The skilled person realizes easily that the same methodology works for more heat exchanger portions, and likewise for a system lacking the bypass channel. It is obvious that other flow controllers, e.g. fans, also may be controlled different compared to normal heat exchange mode, e.g. by lowering the total airflow during a defrosting cycle. The control system may also be used together with other control features and algorithms, e.g. may there be some set maximum time for defrosting of each heat exchanger portion such that the defrost operation sometimes is ended before the pressure drop increase. Hence, the skilled person may use the knowledge disclosed herein to control the defrost cycle for a system comprising several heat exchanger portions to end the defrosting operation for one heat exchanger portion when there is an overall pressure drop increase for several heat exchanger portions.

## Claims

1. An air treatment system (1) having an extract air channel (2) comprising at least one extract air inlet (2a) for guiding extract air from a building to the outside through at least one extract air outlet (2b) and a supply air channel (3) comprising at least one supply air inlet (3a) for guiding supply air from the outdoor into a building through at least one supply air outlet (3b), said extract air channel (2) and said supply air channel (3) being in a heat exchanging relation to each other via a heat exchanger (4) comprising at least a first heat exchanger portion (4a) and a second heat exchanger portion (4b), said first heat exchanger portion (4a) associated with a first flow controller (5a), e.g. a first damper, for control of the air flow in the supply air channel (3) of the first heat exchanger portion (4a) and said second heat exchanger portion (4b) associated with a second flow controller (5b), e.g. a second damper, for control of the air flow in the supply air channel (3) of the second heat exchanger portion (4b), said air treatment system (1) further comprising at least one fan (6a, 6b) in order to induce a flow in the air treatment system (1), said extract air channel (2) further provided with pressure indicating means or pressure sensors (7a, 7b) for estimating or measuring a pressure drop over the heat exchanger (4) in the extract air channel (2), e.g. by measuring the pressure in the extract air channel (2) upstream respectively downstream of the heat exchanger (4), said air treatment system (1) further provided with an Electronic Control Unit (ECU) (8) connected to receive input from said pressure indicating means or pressure sensors (7a, 7b) and connected to send control signals to the first and second flow controller (5a, 5b), said ECU (8) being programmed to output a defrost cycle initiation signal including a control signal to a selected flow controller (5a or 5b) to reduce or restrict the flow in the supply air channel (3) through a selected heat exchanger portion (4a or 4b) in order to defrost said heat exchanger portion (4a or 4b) when there is an indication of an undesired high level of ice in said selected heat exchanger portion (4a or 4b) **characterized in that**
said ECU (8) is further programmed to control the air flow in the supply air channel (3) through the selected heat exchanger portion (4a or 4b) to be reduced or restricted while the pressure drop over the heat exchanger portion (4a or 4b) is decreasing, said reduced or restricted flow continuing until there is an indication that the pressure drop over said one heat exchanger portion (4a or 4b) is essentially constant or the pressure drop over several heat exchanger portions (4a, 4b) is essentially constant or increasing.

2. An air treatment system according to claim 1 **characterized in that** a defrosting operation of said at least one heat exchanger portion (4a or 4b) with a reduced or restricted flow will continue as long as the pressure drop over the heat exchanger portions (4a, 4b) is decreasing until there is an indication that the pressure drop measured or estimated over said heat exchanger portions (4a, 4b) is increasing whereby said ECU (8) sends a signal to stop the defrosting of said heat exchanger portion (4a or 4b).

3. An air treatment system (1) according to any previous claim **characterized in that** the supply air channel (3) is provided with a bypass channel (9) and an associated variable flow controller (5c), e.g. a damper, for bypassing the heat exchanger portions (4a, 4b), e.g. to allow a through-flow when there is a defrosting operation of a heat exchanger portion (4a, 4b).

4. An air treatment system (1) according to claim 3 **characterized in that** the bypass flow controller (5c) is controlled to allow a flow through the bypass channel (9) corresponding to between 75 and 100 percent of the normal flow through a heat exchanger portion (4a or 4b).

5. An air treatment system (1) according to claim 3 or 4 **characterized in that** the flow through the bypass channel (9) is calibrated relative the flow through an heat exchanger portion (4a or 4b) by adjusting the bypass flow controller (5c) to be opened to an equivalence position in which the pressure drop over the heat exchanger portions (4a, 4b), under the same working condition in the extract air channel (2), is at the same level when one heat exchanger portion (4a or 4b) is cut off and the others open as when all heat exchanger portions (4a, 4b) are open, said equivalence position of the bypass valve being used for setting the through flow in the bypass channel (9) to a desired level.

6. An air treatment system (1) according to any previous claim **characterized in that** it comprises humidity estimating means in the extract air, e.g. a humidity sensor (11) in the extract air inlet (2a), and temperature estimating means in the heat exchanger portions (4a, 4b), e.g. by measuring the temperature outdoor, in the supply air inlet (3a) or in the extract air outlet (2b) by the use of one or several thermometers (12), said humidity estimating means and temperature estimating means connected to the ECU (8) and adapted to send input signals to the ECU (8) whereby the ECU (8) is programmed to use said input signals to compute that a defrost cycle initiation signal should be output from the ECU (8) when it is indicated that the pressure drop over the heat exchanger portions (4a, 4b) in the extract air channel (2) is above a first limit for a certain air flow in the extract air channel (2), e.g. by comparing a pressure drop versus air flow velocity curve, and the relative humidity in the extract air is above the dew point for an estimated temperature in the heat exchanger provided the estimated temperature is below zero.

7. An air treatment system (1) according to any previous claim **characterized in that** a defrost cycle initiation signal is output from the ECU (8) when it is indicated that the pressure drop over one or several heat exchanger portions (4a, 4b) in the extract air channel is above a second limit for a certain air flow in the extract air channel (2), e.g. by comparing with a pressure drop versus air flow velocity curve, said second pressure drop limit being larger than a first pressure drop limit being dependent on the exhaust air humidity and the exhaust air temperature.

8. An air treatment system (1) according to any previous claim **characterized in that** limits for a defrost cycle initiation signal is set in the ECU (8) based on at least one pressure drop measurement over one or several heat exchanger portions (4a, 4b) in the extract air channel (2) when being in a defrosted condition for a certain air flow or for a known configuration of fan velocities and valve positions, said measured pressure drop being used for setting limits for the defrost cycle initiation signal for other flow velocities and/or system configurations, e.g. by creating a pressure drop versus air flow velocity defrost cycle initiation limit curve.

9. An air treatment system according to claim 7 or 8 **characterized in that** said ECU (8) is adapted to be reprogrammed *in situ* in order to recalculate limits for a defrost cycle initiation signal based on at least one pressure drop measurement over the heat exchanger (4) in the extract air channel (2).

10. An air treatment system according to any previous claim **characterized in that** said heat exchanger (4) comprises more than two heat exchanger portions (4a-d) whereof each heat exchanger portion (4a-d) is provided with an associated air flow controller (5a-d) for individually control the flow of air through each heat exchanger portion (4a-d).

11. A method for controlling the defrosting of an air treatment system (1) having an extract air channel (2) comprising at least one air inlet (2a) for guiding exhaust air from a building to the outside through at least one extract air outlet (2b) and a supply air channel (3) comprising at least one fresh air inlet (3a) for guiding fresh air from the outdoor into a building through at least one fresh air outlet (3b), said extract air channel (2) and said supply air channel(3) being in a heat exchanging relation to each other via at least a first heat exchanger portion (4a) and a second heat exchanger portion (4b), said air treatment system (1) further comprising air flow controllers (5a, 5b) such as dampers and fans (6a, 6b) in order to control the flow of air in the extract air channel (2) and the supply air channel (3), said extract air channel (2) further provided with pressure indicating means or pressure sensors (7a, 7b) in order to calculate a pressure drop over at least one of the heat exchanger portions (4a, 4b) or the heat exchanger (4) in the extract air channel (2), said air treatment system further provided with an Electronic Control Unit (ECU) (8) for control of the air treatment system (1) comprising the steps of:
- Measuring or estimating the pressure drop over at least one of the heat exchanger portions (4a, 4b) in the extract air channel(2) and using this information in the ECU (8) for deciding if there should be a defrost cycle performed
- Sending a defrost cycle initiation signal as output from the ECU (8) in order to defrost at least one of said heat exchanger portions (4a, 4b) if it is decided by the ECU (8) by the use of the pressure drop estimation that a defrost cycle should be performed
- control the flow in the supply air channel (3) through at least one heat exchanger portion (4a or 4b) to be defrosted to be reduced or restricted by an airflow controller (5a, 5b) as a response to the defrost cycle initiation signal
- measuring or estimating the pressure drop over the heat exchanger portion (4a or 4b) to be defrosted during the defrost cycle while said reduced or restricted flow continues
- Continue with the defrost cycle as the pressure drop over the heat exchanger portion (4a or 4b) to be defrosted is decreasing until there is an indication that the pressure drop measured or estimated over said one heat exchanger portion (4a or 4b) is essentially constant or the pressure drop over several heat exchanger portions (4a, 4b) is essentially constant or increasing.

## Patentansprüche

1. Luftbehandlungssystem (1) mit einem Abluftkanal (2), der mindestens einen Ablufteinlass (2a) zur Führung von Abluft aus einem Gebäude nach außen durch mindestens einen Abluftauslass (2b) und einen Zuluftkanal (3) mit mindestens einem Zulufteinlass (3a) zur Führung von Zuluft von draußen in ein Gebäude durch mindestens einen Zuluftauslass (3b) umfasst, wobei der Abluftkanal (2) und der Zuluftkanal (3) über einen Wärmetauscher (4) in einer wärmeaustauschenden Beziehung zueinander stehen, der mindestens einen ersten Wärmetauscherabschnitt (4a) und einen zweiten Wärmetauscherabschnitt (4b) umfasst, wobei der erste Wärmetauscherabschnitt (4a) mit einer erster Strömungssteuerung (5a) verbunden ist, z. B. einer ersten Klappe, zur Steuerung des Luftstroms in dem Zuluftkanal (3) des ersten Wärmetauscherabschnitts (4a) und der zweite Wärmetauscherabschnitt (4b) mit einer zweiten Strömungssteuerung (5b) verbunden ist, z. B. einer zweiten Klappe, zur Steuerung des Luftstroms im Zuluftkanal (3) des zweiten Wärmetauscherabschnitts (4b), wobei das Luftbehandlungssystem (1) ferner mindestens ein Gebläse (6a, 6b) umfasst, um einen Strom im Luftbehandlungssystem (1) zu induzieren, wobei der Abluftkanal (2) ferner mit Druckanzeigemitteln oder Drucksensoren (7a, 7b) zum Abschätzen oder Messen eines Druckabfalls über den Wärmetauscher (4) in dem Abluftkanal (2) versehen ist, z. B. durch Messen des Drucks in dem Abluftkanal (2) stromaufwärts bzw. stromabwärts des Wärmetauschers (4), wobei das Luftbehandlungssystem (1) ferner mit einer elektronischen Steuereinheit (ECU) (8) versehen ist, die so angeschlossen ist, dass sie ein Eingabe von den Druckanzeigemitteln oder Drucksensoren (7a, 7b) empfängt und so angeschlossen ist, dass sie Steuersignale an die erste und zweite Strömungssteuerung (5a, 5b) sendet, wobei die ECU (8) so programmiert ist, dass sie ein Abtauzyklus-Initiationssignal einschließlich eines Steuersignals an eine ausgewählte Strömungssteuerung (5a oder 5b) ausgibt, um den Strom in dem Zuluftkanal (3) durch einen ausgewählten Wärmetauscherabschnitt (4a oder 4b) zu reduzieren oder einzuschränken, um den Wärmetauscherabschnitt (4a oder 4b) abzutauen, wenn eine Anzeige eines unerwünschten hohen Eispegels in dem ausgewählten Wärmetauscherabschnitt (4a oder 4b) vorliegt,
**dadurch gekennzeichnet, dass**
die ECU (8) ferner so programmiert ist, dass sie den Luftstrom in dem Zuluftkanal (3) durch den ausgewählten Wärmetauscherabschnitt (4a oder 4b) so steuert, dass er reduziert oder eingeschränkt wird, während der Druckabfall über den Wärmetauscherabschnitt (4a oder 4b) abnimmt, wobei der reduzierte oder eingeschränkte Strom so lange fortgesetzt wird, bis eine Anzeige vorliegt, dass der Druckabfall über den einen Wärmetauscherabschnitt (4a oder 4b) im Wesentlichen konstant ist oder der Druckabfall über mehrere Wärmetauscherabschnitte (4a, 4b) im Wesentlichen konstant oder zunehmend ist.

2. Luftbehandlungssystem nach Anspruch 1, **dadurch gekennzeichnet, dass** ein Abtauvorgang des mindestens einen Wärmetauscherabschnitts (4a oder 4b) mit einem reduzierten oder eingeschränkten Strom so lange fortgesetzt wird, wie der Druckabfall über die Wärmetauscherabschnitte (4a, 4b) abnimmt, bis eine Anzeige vorliegt, dass der gemessene oder geschätzte Druckabfall über die Wärmetauscherabschnitte (4a, 4b) zunimmt, wobei die ECU (8) ein Signal zum Stoppen des Abtauens des Wärmetauscherabschnitts (4a oder 4b) sendet.

3. Luftbehandlungssystem (1) nach einem der vorstehenden Ansprüche, **dadurch gekennzeichnet, dass** der Zuluftkanal (3) mit einem Bypasskanal (9) und einer verbundenen variablen Strömungssteuerung (5c), z. B. einer Klappe, zum Umgehen der Wärmetauscherabschnitte (4a, 4b) versehen ist, z. B. um einen Durchfluss zu ermöglichen, wenn ein Abtauvorgang eines Wärmetauscherabschnitts (4a, 4b) stattfindet.

4. Luftbehandlungssystem (1) nach Anspruch 3, **dadurch gekennzeichnet, dass** die Bypass-Strömungssteuerung (5c) so gesteuert wird, dass ein Strom durch den Bypasskanal (9) ermöglicht wird, der zwischen 75 und 100 Prozent des normalen Stroms durch einen Wärmetauscherabschnitt (4a oder 4b) entspricht.

5. Luftbehandlungssystem (1) nach Anspruch 3 oder 4, **dadurch gekennzeichnet, dass** der Strom durch den Bypasskanal (9) relativ zu dem Strom durch einen Wärmetauscherabschnitt (4a oder 4b) kalibriert wird, indem die zu öffnende Bypass-Strömungssteuerung (5c) auf eine Äquivalenzposition eingestellt wird, in welcher der Druckabfall über die Wärmetauscherabschnitte (4a, 4b), unter den gleichen Betriebsbedingungen im Abluftkanal (2), auf dem gleichen Pegel ist, wenn ein Wärmetauscherabschnitt (4a oder 4b) abgesperrt ist und die anderen offen sind, wie wenn alle Wärmetauscherabschnitte (4a, 4b) offen sind, wobei die Äquivalenzposition des Bypassventils zur Einstellung des Durchflusses im Bypasskanal (9) auf einen gewünschten Pegel verwendet wird.

6. Luftbehandlungssystem (1) nach einem der vorstehenden Ansprüche, **dadurch gekennzeichnet, dass** es Feuchtigkeitsabschätzungsmittel in der Abluft, z. B. einen Feuchtigkeitssensor (11) im Ablufteinlass (2a), und Temperaturabschätzungsmittel in den Wärmetauscherabschnitten (4a, 4b), z. B. durch Messung der Außentemperatur, im Zulufteinlass (3a) oder im Abluftauslass (2b), unter Verwendung von einem oder mehreren Thermometern (12) umfasst, wobei die Feuchtigkeitsabschätzungsmittel und die Temperaturabschätzungsmittel an die ECU (8) angeschlossen sind und darauf ausgelegt sind, Eingangssignale an die ECU (8) zu senden, wobei die ECU (8) programmiert ist, die Eingangssignale zu verwenden, um zu berechnen, dass ein Abtauzyklus-Initiationssignal von der ECU (8) ausgegeben werden sollte, wenn angezeigt wird, dass der Druckabfall über die Wärmetauscherabschnitte (4a, 4b) im Abluftkanal (2) über einem ersten Grenzwert für einen bestimmten Luftstrom im Abluftkanal (2) liegt, z. B. durch Vergleichen einer Kurve des Druckabfalls gegenüber der Luftströmungsgeschwindigkeit, und die relative Feuchtigkeit in der Abluft über dem Taupunkt für eine geschätzte Temperatur im Wärmetauscher liegt, vorausgesetzt, dass die geschätzte Temperatur unter Null liegt.

7. Luftbehandlungssystem (1) nach einem der vorstehenden Ansprüche, **dadurch gekennzeichnet, dass** ein Abtauzyklus-Initiationssignal von der ECU (8) ausgegeben wird, wenn angezeigt wird, dass der Druckabfall über einen oder mehrere Wärmetauscherabschnitte (4a, 4b) im Abluftkanal über einem zweiten Grenzwert für einen bestimmten Luftstrom im Abluftkanal (2) liegt, z. B. durch Vergleichen mit einer Kurve des Druckabfalls gegenüber der Luftströmungsgeschwindigkeit, wobei der zweite Druckabfallgrenzwert größer als ein erster Druckabfallgrenzwert ist, der von der Abluftfeuchtigkeit und der Ablufttemperatur abhängt.

8. Luftbehandlungssystem (1) nach einem der vorstehenden Ansprüche, **dadurch gekennzeichnet, dass** Grenzwerte für ein Abtauzyklus-Initiationssignal in der ECU (8) auf Grundlage von mindestens einer Druckabfallmessung über einen oder mehrere Wärmetauscherabschnitte (4a, 4b) im Abluftkanal (2) eingestellt werden, wenn sie sich in einer abgetauten Bedingung für einen bestimmten Luftstrom oder für eine bekannte Konfiguration von Gebläsegeschwindigkeiten und Ventilpositionen befinden, wobei der gemessene Druckabfall zur Einstellung von Grenzwerten für das Abtauzyklus-Initiationssignal für andere Strömungsgeschwindigkeiten und/oder Systemkonfigurationen verwendet wird, z. B. durch Erstellung einer Abtauzyklus-Initiationsgrenzkurve für den Druckabfall gegenüber der Luftströmungsgeschwindigkeit.

9. Luftbehandlungssystem nach Anspruch 7 oder 8, **dadurch gekennzeichnet, dass** die ECU (8) so angepasst ist, dass sie vor Ort umprogrammiert werden kann, um Grenzwerte für ein Abtauzyklus-Initiationssignal auf Grundlage von mindestens einer Druckabfallmessung über den Wärmetauscher (4) im Abluftkanal (2) neu zu berechnen.

10. Luftbehandlungssystem nach einem der vorstehenden Ansprüche, **dadurch gekennzeichnet, dass** der Wärmetauscher (4) mehr als zwei Wärmetauscherabschnitte (4a-d) umfasst, von denen jeder Wärmetauscherabschnitt (4a-d) mit einer verbundenen Luftströmungssteuerung (5a-d) zur individuellen Steuerung des Luftstroms durch jeden Wärmetauscherabschnitt (4a-d) versehen ist.

11. Verfahren zur Steuerung des Abtauens eines Luftbehandlungssystems (1) mit einem Abluftkanal (2), der mindestens einen Lufteinlass (2a) zur Führung von Abluft aus einem Gebäude nach draußen durch mindestens einen Abluftauslass (2b) umfasst, und einen Zuluftkanal (3), der mindestens einen Frischlufteinlass (3a) zur Führung von Frischluft von draußen in ein Gebäude durch mindestens einen Frischluftauslass (3b) umfasst, wobei der Abluftkanal (2) und der Zuluftkanal (3) über mindestens einen ersten Wärmetauscherabschnitt (4a) und einen zweiten Wärmetauscherabschnitt (4b) in einer wärmeaustauschenden Beziehung zueinander stehen, wobei das Luftbehandlungssystem (1) ferner Luftströmungssteuerungen (5a, 5b) wie z. B. Klappen und Gebläse (6a, 6b) umfasst, um den Luftstrom in dem Abluftkanal (2) und dem Zuluftkanal (3) zu steuern, wobei der Abluftkanal (2) ferner mit Druckanzeigemitteln oder Drucksensoren (7a, 7b) versehen ist, um einen Druckabfall über mindestens einen der Wärmetauscherabschnitte (4a, 4b) oder den Wärmetauscher (4) im Abluftkanal (2) zu berechnen, wobei das Luftbehandlungssystem ferner mit einer elektronischen Steuereinheit (ECU) (8) zur Steuerung des Luftbehandlungssystems (1) versehen ist, umfassend die folgenden Schritte:
- Messen oder Abschätzen des Druckabfalls über mindestens einen der Wärmetauscherabschnitte (4a, 4b) im Abluftkanal (2) und Verwendung dieser Informationen in der ECU (8) zur Entscheidung, ob ein Abtauzyklus durchgeführt werden sollte
- Senden eines Abtauzyklus-Initiationssignals als Ausgabe von der ECU (8), um mindestens einen der Wärmetauscherabschnitte (4a, 4b) abzutauen, wenn von der ECU (8) durch die Verwendung der Druckabfallschätzung entschieden wird, dass ein Abtauzyklus durchgeführt werden sollte
- Steuern des Stroms im Zuluftkanal (3) durch mindestens einen abzutauenden Wärmetauscherabschnitt (4a oder 4b), der durch eine Luftströmungssteuerung (5a, 5b) als Reaktion auf das Abtauzyklus-Initiationssignal zu reduzieren oder einzuschränken ist
- Messen oder Abschätzen des Druckabfalls über den abzutauenden Wärmetauscherabschnitt (4a oder 4b) während des Abtauzyklus, während der reduzierte oder eingeschränkte Strom fortgesetzt wird
- Fortsetzen des Abtauzyklus, wenn der Druckabfall über den abzutauenden Wärmetauscherabschnitt (4a oder 4b) abnimmt, bis eine Anzeige vorliegt, dass der über den einen Wärmetauscherabschnitt (4a oder 4b) gemessene oder geschätzte Druckabfall im Wesentlichen konstant ist oder der Druckabfall über mehrere Wärmetauscherabschnitte (4a, 4b) im Wesentlichen konstant oder zunehmend ist.

## Revendications

1. Système de traitement d'air (1) présentant un conduit d'air extrait (2), comprenant au moins une entrée d'air extrait (2a) pour guider de l'air extrait d'un bâtiment vers l'extérieur par au moins une sortie d'air extrait (2b), et un conduit d'air fourni (3) comprenant au moins une entrée d'air fourni (3a) pour guider de l'air fourni provenant de l'extérieur dans un bâtiment par au moins une sortie d'air fourni (3b), ledit conduit d'air extrait (2) et ledit conduit d'air fourni (3) se trouvant dans une relation d'échange de chaleur entre eux par le biais d'un échangeur de chaleur (4) comprenant au moins une première partie d'échangeur de chaleur (4a) et une deuxième partie d'échangeur de chaleur (4b), ladite première partie d'échangeur de chaleur (4a) étant associée à un premier régulateur de débit (5a), par exemple un premier registre, pour réguler le débit d'air dans le conduit d'air fourni (3) de la première partie d'échangeur de chaleur (4a), et ladite deuxième partie d'échangeur de chaleur (4b) étant associée à un deuxième régulateur de débit (5b), par exemple un deuxième registre, pour réguler le débit d'air dans le conduit d'air fourni (3) de la deuxième partie d'échangeur de chaleur (4b), ledit système de traitement d'air (1) comprenant en outre au moins un ventilateur (6a, 6b) servant à produire un débit dans le système de traitement d'air (1), ledit conduit d'air extrait (2) étant en outre pourvu de moyens d'indication de pression ou de capteurs de pression (7a, 7b) pour estimer ou mesurer une chute de pression dans l'échangeur de chaleur (4) au niveau du conduit d'air extrait (2), par exemple en mesurant la pression au niveau du conduit d'air extrait (2) en amont et en aval de l'échangeur de chaleur (4), ledit système de traitement d'air (1) étant en outre pourvu d'une unité de commande électronique (ECU) (8) connectée pour recevoir des données d'entrée en provenance desdits moyens d'indication de pression ou capteurs de pression (7a, 7b) et connectée pour envoyer des signaux de commande aux premier et deuxième régulateurs de débit (5a, 5b), ladite ECU (8) étant programmée pour émettre un signal de déclenchement de cycle de dégivrage, dont un signal de commande destiné à un régulateur de débit (5a ou 5b) particulier pour réduire ou limiter, dans le conduit d'air fourni (3), le débit traversant une partie d'échangeur de chaleur (4a ou 4b) particulière afin de dégivrer ladite partie d'échangeur de chaleur (4a ou 4b) quand une indication signale un haut niveau de givre indésirable dans ladite partie d'échangeur de chaleur (4a ou 4b) particulière,
**caractérisé en ce que**
ladite ECU (8) est en outre programmée pour réguler, dans le conduit d'air fourni (3), le débit d'air traversant la partie d'échangeur de chaleur (4a ou 4b) particulière afin qu'il soit réduit ou limité tandis que la chute de pression dans la partie d'échangeur de chaleur (4a ou 4b) diminue, ledit débit réduit ou limité se poursuivant jusqu'à ce qu'il y ait une indication selon laquelle la chute de pression dans ladite une partie d'échangeur de chaleur (4a ou 4b) est sensiblement constante ou selon laquelle la chute de pression dans plusieurs parties d'échangeur de chaleur (4a, 4b) est sensiblement constante ou en augmentation.

2. Système de traitement d'air selon la revendication 1, **caractérisé en ce qu'**une opération de dégivrage de ladite au moins une partie d'échangeur de chaleur (4a ou 4b) avec un débit réduit ou limité se poursuivra tant que la chute de pression dans les parties d'échangeur de chaleur (4a, 4b) diminuera, jusqu'à ce qu'il y ait une indication selon laquelle la chute de pression mesurée ou estimée dans lesdites parties d'échangeur de chaleur (4a, 4b) augmente, moyennant quoi ladite ECU (8) envoie un signal pour arrêter le dégivrage de ladite partie d'échangeur de chaleur (4a ou 4b).

3. Système de traitement d'air (1) selon l'une quelconque des revendications précédentes, **caractérisé en ce que** le conduit d'air fourni (3) est pourvu d'un conduit de dérivation (9) et d'un régulateur de débit variable (5c) associé, par exemple un registre, pour contourner les parties d'échangeur de chaleur (4a, 4b), par exemple pour permettre un écoulement quand il y a une opération de dégivrage d'une partie d'échangeur de chaleur (4a, 4b).

4. Système de traitement d'air (1) selon la revendication 3, **caractérisé en ce que** le régulateur de débit (5c) de dérivation est commandé pour permettre un débit à travers le conduit de dérivation (9) correspondant à 75 à 100 pour cent du débit normal traversant une partie d'échangeur de chaleur (4a ou 4b).

5. Système de traitement d'air (1) selon la revendication 3 ou 4, **caractérisé en ce que** le débit traversant le conduit de dérivation (9) est calibré par rapport au débit traversant une partie d'échangeur de chaleur (4a ou 4b) en réglant le régulateur de débit (5c) de dérivation afin qu'il soit ouvert dans une position d'équivalence dans laquelle, pour des conditions de fonctionnement identiques dans le conduit d'air extrait (2), la chute de pression dans les parties d'échangeur de chaleur (4a, 4b) est au même niveau quand une partie d'échangeur de chaleur (4a ou 4b) est coupée et les autres ouvertes que quand toutes les parties d'échangeur de chaleur (4a, 4b) sont ouvertes, ladite position d'équivalence de la soupape de dérivation servant à régler le débit dans le conduit de dérivation (9) à un niveau souhaité.

6. Système de traitement d'air (1) selon l'une quelconque des revendications précédentes, **caractérisé en ce qu'**il comprend des moyens d'estimation de l'humidité dans l'air extrait, par exemple un capteur d'humidité (11) dans l'entrée d'air extrait (2a), et des moyens d'estimation de température dans les parties d'échangeur de chaleur (4a, 4b), qui mesurent par exemple la température à l'extérieur, dans l'entrée d'air fourni (3a) ou dans la sortie d'air extrait (2b) au moyen d'un ou de plusieurs thermomètres (12), lesdits moyens d'estimation de l'humidité et moyens d'estimation de température étant connectés à l'ECU (8) et conçus pour envoyer des signaux d'entrée à l'ECU (8), moyennant quoi l'ECU (8) est programmée pour utiliser lesdits signaux d'entrée afin de calculer qu'un signal de déclenchement de cycle de dégivrage doit être émis par l'ECU (8) quand il est indiqué que la chute de pression dans les parties d'échangeur de chaleur (4a, 4b) au niveau du conduit d'air extrait (2) est supérieure à une première limite pour un certain débit d'air dans le conduit d'air extrait (2), par exemple par comparaison à une courbe relative à la chute de pression en fonction de la vitesse d'écoulement d'air, et que l'humidité relative dans l'air extrait est supérieure au point de rosée pour une température estimée dans l'échangeur de chaleur à condition que la température estimée soit inférieure à zéro.

7. Système de traitement d'air (1) selon l'une quelconque des revendications précédentes, **caractérisé en ce qu'**un signal de déclenchement de cycle de dégivrage est émis par l'ECU (8) quand il est indiqué que la chute de pression dans une ou plusieurs parties d'échangeur de chaleur (4a, 4b) au niveau du conduit d'air extrait est supérieure à une deuxième limite pour un certain débit d'air dans le conduit d'air extrait (2), par exemple par comparaison à une courbe relative à la chute de pression en fonction de la vitesse d'écoulement, ladite deuxième limite de chute de pression étant supérieure à une première limite de chute de pression qui est dépendante de l'humidité de l'air évacué et de la température de l'air évacué.

8. Système de traitement d'air (1) selon l'une quelconque des revendications précédentes, **caractérisé en ce que** des limites pour un signal de déclenchement de cycle de dégivrage sont réglées dans l'ECU (8) en fonction d'au moins une mesure de la chute de pression dans une ou plusieurs parties d'échangeur de chaleur (4a, 4b) au niveau du conduit d'air extrait (2), dans un état dégivré, pour un certain débit d'air ou pour une configuration connue de vitesses de ventilateur et de positions de soupape, ladite chute de pression mesurée servant à régler des limites pour le signal de déclenchement de cycle de dégivrage pour d'autres vitesses d'écoulement et/ou configurations de système, par exemple en créant une courbe de limite de déclenchement de dégivrage relative à la chute de pression en fonction de la vitesse d'écoulement de l'air.

9. Système de traitement d'air selon la revendication 7 ou 8, **caractérisé en ce que** ladite ECU (8) est conçue pour être reprogrammée *in situ* afin de recalculer des limites pour un signal de déclenchement de cycle de dégivrage en fonction d'au moins une mesure de la chute de pression dans l'échangeur de chaleur (4) au niveau du conduit d'air extrait (2).

10. Système de traitement d'air selon l'une quelconque des revendications précédentes, **caractérisé en ce que** ledit échangeur de chaleur (4) comprend plus de deux parties d'échangeur de chaleur (4a-d), chaque partie d'échangeur de chaleur (4a-d) étant pourvue d'un régulateur de débit d'air (5a-d) associé pour réguler individuellement le débit d'air traversant chaque partie d'échangeur de chaleur (4a-d).

11. Procédé de commande du dégivrage d'un système de traitement d'air (1) présentant un conduit d'air extrait (2), comprenant au moins une entrée d'air (2a) pour guider de l'air évacué d'un bâtiment vers l'extérieur par au moins une sortie d'air extrait (2b), et un conduit d'air fourni (3) comprenant au moins une entrée d'air neuf (3a) pour guider de l'air neuf provenant de l'extérieur dans un bâtiment par au moins une sortie d'air neuf (3b), ledit conduit d'air extrait (2) et ledit conduit d'air fourni (3) se trouvant dans une relation d'échange de chaleur entre eux par le biais d'au moins une première partie d'échangeur de chaleur (4a) et une deuxième partie d'échangeur de chaleur (4b), ledit système de traitement d'air (1) comprenant en outre des régulateurs de débit d'air (5a, 5b), tels que des registres et des ventilateurs (6a, 6b), afin de réguler le débit d'air dans le conduit d'air extrait (2) et le conduit d'air fourni (3), ledit conduit d'air extrait (2) étant en outre pourvu de moyens d'indication de pression ou de capteurs de pression (7a, 7b) afin de calculer une chute de pression dans au moins une des parties d'échangeur de chaleur (4a, 4b) ou dans l'échangeur de chaleur (4) au niveau du conduit d'air extrait (2), ledit système de traitement d'air étant en outre pourvu d'une unité de commande électronique (ECU) (8) pour commander le système de traitement d'air (1), le procédé comprenant les étapes consistant à :
- mesurer ou estimer la chute de pression dans au moins une des parties d'échangeur de chaleur (4a, 4b) au niveau du conduit d'air extrait (2) et utiliser cette information dans l'ECU (8) pour déterminer si un cycle de dégivrage doit être effectué
- envoyer un signal de déclenchement de cycle de dégivrage comme sortie de l'ECU (8) afin de dégivrer au moins une desdites parties d'échangeur de chaleur (4a, 4b) si l'ECU (8) détermine, compte tenu de l'estimation de chute de pression, qu'un cycle de dégivrage doit être effectué
- réguler, dans le conduit d'air fourni (3), le débit traversant au moins une partie d'échangeur de chaleur (4a ou 4b) à dégivrer afin qu'il soit réduit ou limité par un régulateur de débit d'air (5a, 5b) en réaction au signal de déclenchement de cycle de dégivrage
- mesurer ou estimer la chute de pression dans la partie d'échangeur de chaleur (4a ou 4b) à dégivrer pendant le cycle de dégivrage tandis que ledit débit réduit ou limité se poursuit
- poursuivre le cycle de dégivrage lorsque la chute de pression dans la partie d'échangeur de chaleur (4a ou 4b) à dégivrer diminue, jusqu'à ce qu'il y ait une indication selon laquelle la chute de pression mesurée ou estimée dans ladite une partie d'échangeur de chaleur (4a ou 4b) est sensiblement constante ou selon laquelle la chute de pression dans plusieurs parties d'échangeur de chaleur (4a, 4b) est sensiblement constante ou en augmentation.
